# EUROPÄISCHE PATENTSCHRIFT

(11) **EP 1 647 150 B1**
(45) Veröffentlichungstag und Bekanntmachung des Hinweises auf die Patenterteilung: **07.03.2007**
(21) Anmeldenummer: 04766237.4
(22) Anmeldetag: 15.07.2004
(51) Int. Cl.: H04Q 3/00

(54) **INDIVIDUELLE DIENSTANBIETERSPEZIFISCHE AKTUALISIERUNG ODER NEUGESTALTUNG VON ANSAGE- UND DIALOGDIENSTEN**
INDIVIDUAL UPDATE OR REORGANISATION OF MESSAGE AND DIALOGUE SERVICES SPECIFIC TO SERVICE PROVIDERS
ACTUALISATION OU RECONFIGURATION INDIVIDUELLE ET SPECIFIQUE A UN PRESTATAIRE DE SERVICES DE SERVICES D'ANNONCES OU DE DIALOGUES

(30) Priorität: 18.07.2003 DE 10332839
(43) Veröffentlichungstag der Anmeldung: 19.04.2006
(73) Patentinhaber: SIEMENS AKTIENGESELLSCHAFT, 80333 München (DE)
(72) Erfinder: FRANZ, Mathias, 10178 Berlin (DE); FREUND, Detlev, 10707 Berlin (DE); LÖBIG, Norbert, 64291 Darmstadt (DE); SCHÖPF, Johannes, 82256 Fürstenfeldbruck (DE)
(86) Internationale Anmeldenummer: PCT/EP2004/051510
(87) Internationale Veröffentlichungsnummer: WO 2005/011303

(56) Entgegenhaltungen:
- EP-A- 1 271 881

## Beschreibung

Die Erfindung betrifft eine Anordnung zur durch Dienstanbieter triggerbaren Bereitstellung von Komponenten für eine Informationsausgabe oder einen interaktive Dialog und ein Verfahren zur Bereitstellung von Komponenten für neu erzeugte oder geänderte Informationsausgaben oder interaktive Dialoge mittels einer Anordnung, welche eine Versorgungsvorrichtung und wenigstens eine Bereitstellungsvorrichtung umfasst.

In der Telekommunikation und der Datenübertragungstechnik spielen Dienste eine immer größere Rolle, die durch eine automatisierte Informationsübertragung oder einen automatisierten Nutzerdialog gekennzeichnet sind. Dazu gehören beispielsweise die herkömmlichen Ansagendienste, aber auch Dialogdienste, zum Beispiel für Bankgeschäfte oder zur Konfiguration von Mailboxen für Mobiltelefone. Im Zuge der rasanten Weiterentwicklung der Netze sind auch Dienste denkbar, bei denen mittels eines Dialogs Audio- oder Videoinformationen, zum Beispiel den Rahmen eines Video on Demand-Dienstes abgerufen werden. Für einen derartigen Informationsausgabe- oder Dialogdienst müssen Netzfunktionen zur Verfügung gestellt werden, die eine Kommunikation zwischen Dienstanbieter und Dienstnutzer ermöglichen. Dafür gibt es herkömmlich zwei Modelle:
- Entweder ein Netzbetreiber stellt einem oder mehreren Dienstanbietern Funktionen für die Durchführung des beziehungsweise der Dienste zur Verfügung, die auf geeigneter Hardware, zum Beispiel einer Vermittlungsstelle oder Servereinrichtung, lokalisiert ist. Für eine Änderung eines Dienstes muss dann der Dienstanbieter sich mit dem Änderungswunsch an den Netzbetreiber wenden, der dann die Änderung auf seiner Hardware realisiert beziehungsweise implementiert.
- Ein zweiter Ansatz ist die Auslagerung des gesamten Ansage- beziehungsweise Dialogdienstes in eine externe, das heißt eine von der Vermittlungsstelle unabhängige Plattform beim Dienstanbieter. Der Dienstanbieter betreibt dann eine Hardwareeinrichtung, auf der er seine Dienste den Dienstnutzern zur Verfügung stellt. Der Dienstanbieter greift in diesem Fall nur noch für die Übermittlung beziehungsweise Vermittlung der im Rahmen eines Dienstes übertragenen Informationen auf die durch den Netzbetreiber zur Verfügung gestellte Funktionalität zurück.

Der erste Ansatz hat den Nachteil einer für den Dienstanbieter umständlichen Änderung beziehungsweise Neugestaltung von Diensten. Die zweite Alternative ist für den Dienstanbieter mit erheblichem Aufwand, nämlich Anschaffung und Wartung von dedizierter Hardware verbunden (zum Beispiel eines Sprachdialogservers beziehungsweise IVR Servers (Interactive Voice Response Servers)), die nur in seltenen Fällen optimal ausgenutzt wird.

Ein anderes Beispiel ist aus EP 1271881 bekannt. Die Erfindung hat zur Aufgabe, dialogbezogene Dienste beziehungsweise Informationsausgabedienste zu optimieren, wobei Nachteile herkömmlicher Verfahren vermieden werden.

Die Aufgabe wird durch eine Anordnung nach Anspruch 1 und ein Verfahren nach Anspruch 14 gelöst.

### Die Erfindung beruht auf folgender Erkenntnis:

Einerseits sollte Hardware für Dialog- oder Sprachausgabedienste für eine Mehrzahl von Dienstanbietern nutzbar sein, um eine optimale Ausnutzung der zur Verfügung stehenden Ressourcen zu ermöglichen. Andererseits sollten Dienstanbieter möglichst viele Möglichkeiten und Freiraum in der Gestaltung ihrer Dienste haben. Idealerweise sollten diese Dienste direkt, das heißt, ohne Vermittlung durch die Netzbetreiber modifizierbar beziehungsweise veränderbar sein. Erfindungsgemäß werden zu diesem Zwecke geeignete Schnittstellen durch eine Anordnung im Zuständigkeitsbereich des Betreibers des Informationsausgabesystems bzw. Sprachdialogsystems bereitgestellt. Diese Speicheranordnung umfasst eine Versorgungsvorrichtung für die Versorgung mit Bestandteilen bzw. Komponenten für Informationsausgaben bzw. interaktive Dialoge und eine Bereitstellungsvorrichtung zur Bereitstellung von Bestandteilen bzw. Komponenten für Informationsausgaben bzw. interaktive Dialoge. Dabei sind von der Versorgungsvorrichtung Bestandteile bzw. Komponenten für Informationsausgaben bzw. interaktive Dialoge zu der Bereitstellungsvorrichtung übertragbar. Dienstanbieter haben Zugriff auf die Versorgungsvorrichtung und können mittels neuer oder geänderter Bestandteile bzw. Komponenten für Informationsausgaben bzw. interaktive Dialoge die von ihnen angebotenen Dienste gestalten bzw. modifizieren. Geänderte oder neue Bestandteile bzw. Komponenten werden dann zu der Bereitstellungsvorrichtung transferiert. Die Versorgungsvorrichtung und die Bereitstellungsvorrichtung können auf derselben Hardware implementiert sein. In einer bevorzugten Ausführung sind sie jedoch auf unterschiedlicher Hardware realisiert und eine Versorgungsvorrichtung beliefert bzw. versorgt eine Mehrzahl von Bereitstellungsvorrichtungen. In diesem Fall ist es sinnvoll, die Versorgungsvorrichtung zu doppeln. In andern Worten: die erfindungsgemäße Anordnung ist aufgeteilt in eine Master Content Function, realisiert durch die Versorgungsvorrichtung und eine Slave Content Function, die durch die Bereitstellungsvorrichtung gegeben ist. Nur auf ersterer können Änderungen durch externe Dienstanbieter durchgeführt werden, die automatisch zu den Bereitstellungsvorrichtungen transferiert werden. Der Transfer beziehungsweise die Übertragung von Informationsausgabenbestandteilen bzw. Komponenten von Informationsausgaben bzw. interaktiven Dialogen erfolgt beispielsweise mit Hilfe des Befehls "Remote Shall rsh" oder "Remote Copy rcp" des UNIX-Betriebssystems. Die zur Bereitstellungsvorrichtung übertragenen Komponenten bzw. Bestandteile stehen Informationsausgabesystemen oder Dialogsystemen, z.B. IVR Servern, zur Verfügung, welche auf die bereitgestellten Komponenten bzw. Bestandteile für die Durchführung von Diensten zugreifen. Im Folgenden wird davon ausgegangen, dass ein Informationsausgabesystemen oder ein Dialogsystemen eine Informationsausgabevorrichtung umfasst, mittels derer Informationen, die Teil einer Informationsausgabe oder eines interaktiven Dialogs sind, an einen Dienstnutzer ausgegeben werden können. Bei dieser Informationsausgabevorrichtung kann es sich z.B. um einen IVR Server handeln. Die Bereitstellungsvorrichtung kann auf derselben Hardwareeinrichtung wie die Informationsausgabefunktionen bzw. die Informationsausgabevorrichtung angeordnet sein. Für die Kommunikation der geänderten bzw. neuen Komponenten und Bestandteile durch die Bereitstellungsvorrichtung an die Informationsausgabevorrichtung gibt es z.B. folgende zwei Möglichkeiten:
- Eine implizite Übermittlung z.B. durch die caching Funktion eines Browsers der Informationsausgabevorrichtung. Je nach Bedarf und Dienstanbieter wird festgelegt, wie lange die Dienstdefinitionen (Ansagen bzw. Dialoge) ihre Gültigkeit behalten. Die Änderung wird dann zum gewünschten Zeitpunkt dadurch wirksam, das eine Aktualisierung der Cache-Informationen getriggert wird, im Rahmen derer die aktualisierten Inhalte geladen werden.
- Eine explizite Übermittlung mittels eines Protokolls zwischen der Bereitstellungsvorrichtung und der Informationsausgabevorrichtung. Durch das Protokoll wird die Änderung des Inhalts einer Ansage bzw. eines Dialogs an die Informationsausgabevorrichtung signalisiert. Dabei ist möglich, geänderte bzw. neue Komponenten oder Bestandteile gleich zu übertragen. In einer bevorzugten Ausführungsform wird jedoch nur die Änderung kommuniziert. Die Informationsausgabevorrichtung greift dann bei Ausführung des entsprechenden Dienstes auf die bei der Bereitstellungsvorrichtung vorgehaltenen Komponenten bzw. Bestandteile zu.

Durch die Erfindung wird eine Schnittstelle zwischen Dienstanbietern und dem Betreiber des Informationsausgabesystems definiert, die eine effiziente Ressourcenausnutzung und Flexibilität bei der Dienstgestaltung gewährleistet. Einerseits können Dienstanbieter ohne Vermittlung durch den Betreiber des Informationsausgabesystems ihr Dienste gestalten, andererseits ist durch die automatische Verteilung der Informationsausgabenbestandteile zur Bereitstellungsvorrichtung gewährleistet, dass der eigentliche Informationsausgabedienst beziehungsweise interaktive Dialog mit dem Teilnehmer völlig in den Zuständigkeitsbereich des Betreibers des Informationsausgabesystems fällt, also eine klare Trennung der geleisteten Dienste gegeben ist. Dadurch wird die Sicherheit des Systems erhöht. Dienstanbieter können nicht direkt auf Bereitstellungsvorrichtungen zugreifen, aber Änderungen bzw. Neugestaltungen ihrer Dienste durch Zugriff auf die Versorgungsvorrichtung triggern bzw. auslösen. Die Struktur bzw. Topologie des vom Netzbetreiber bereitgestellten Systems ist für die Dienstanbieter nicht transparent. Dienstanbieter können so z.B. nicht wider dem Interesse des Netzbetreibers auf die Netztopologie bzw. den Netzstatus bezogene Daten erheben. Durch die Option der Verwendung einer Vielzahl von Bereitstellungsvorrichtungen ist zudem eine hohe Skalierbarkeit gegeben, die mit wenig zusätzlichem Aufwand für den Betreiber des Informationsausgabesystems bzw. des Dialogsystems und mit keinem zusätzlichen Aufwand für Dienstanbieter verbunden ist.

Neben den Bestandteilen bzw. Komponenten für durch Dienstanbieter bereitgestellte Dienste können auch durch den Betreiber des Informationsausgabesystem bzw. Dialogsystems Bestandteile/Komponenten in der Versorgungsvorrichtung abgelegt werden, die beispielsweise für geänderte oder erneuerte Systemansagen verwendet werden.

Gemäß einer vorteilhaften Weiterbildung werden eine oder mehrere Sicherungsmaßnahmen ergriffen, um Probleme beim Zugriff auf die Versorgungsvorrichtung zu vermeiden. Dabei können folgende Maßnahmen ergriffen werden:
- Eine strikte Trennung des Speicherbereichs auf der Versorgungsvorrichtung, auf den die verschiedenen Dienstnutzer bzw. der Betreiber des Informationsausgabesystems/Dialogsystems Zugriff haben, kann zum Beispiel durch geeignetes Setzen von Berechtigungen realisiert werden.
- Ein Zugriff auf die Versorgungsvorrichtung bzw. bestimmte Speicherbereiche davon, kann mit Hilfe von Passworten bzw. Authentifzierungsmaßnahmen geschützt werden.
- Der Zugriff auf die Versorgungsvorrichtung kann zudem mit Hilfe eines Firewalls gegen unzulässige Datenübertragung abgesichert werden.

Weiter ist es vorteilhaft, die Änderung bzw. Neuablage von Bestandteilen bzw. Komponenten für Informationsausgabedienste oder Dialogdienste mit einer Vergebührung zu verknüpfen. Dabei triggert zum Beispiel die Änderung beziehungsweise Neuablage das Erstellung eines Vergebührungstickets, zum Beispiel in einem Vergebührungsserver, dem die Änderung signalisiert wird.

Es ist sowohl denkbar, dass sich ein Dienstanbieter direkt auf der Versorgungsvorrichtung einloggt, um dort Änderungen vorzunehmen, als auch dass geänderte Bestandteile/Komponenten zu der Versorgungsvorrichtung übertragen werden und gegebenenfalls dort ältere Versionen des entsprechenden Bestandteils bzw. der entsprechenden Komponente ersetzen. Im letzteren Fall kann zum Beispiel im Zuständigkeitsbereich des Dienstanbieters ein Komponentengestaltungssystem - zum Beispiel realisiert auf einem PC - gegeben sein, welches für die Modifikation der Dienste verwendet wird, und von dem aus geänderte beziehungsweise neue Bestandteile bzw. Komponenten für Informationsausgabedienste oder Dialogdienste zu Versorgungsvorrichtung transferiert werden. Ebenso kann der Betreiber des Informationsausgabensystems bzw. Dialogsystems über eine Komponentengestaltungsvorrichtung verfügen, um so ihm zugeordnete Ansagen beziehungsweise Dialoge, zum Beispiel Systemansagen, zu ändern. Die Bereitstellungsvorrichtungen stellen beispielsweise Informationsausgabenbestandteile bzw. Komponenten für Informationsausgabevorrichtungen zur Verfügung, die für einen Dienst, zum Beispiel eine Informationsausgabe oder einen Dialog auf eine Versorgungsvorrichtung zugreifen. Die Bereitstellungsvorrichtung und die Informationsausgabenvorrichtung können dabei auch integriert realisiert sein.

Informationsausgabenbestandteile bzw. Komponenten können beispielsweise XML bzw. VXML Files (XML für Extensible Markup Language, VXML für Voice XML), WAV Files (WAV steht für Waves; die Files kodieren Audio-Informationen) oder sogenannte grammars, d.h. Steuerungsfiles zur Bewertung der Spracheingabe bei Dialogen, enthalten. Die Steuerung der Sprachausgabe bzw. die Zusammensetzung von Sprachausgaben erfolgt z.B. mittels Voice XML Files (VXML Files). Generell werden hier die Begriffe Informationsausgabebestandteil, Bestandteil und Komponente so verwendet, dass sie sich auf alle Daten bzw. Files beziehen, die für die Zusammensetzung und Abspielung von Informationsausgaben beziehungsweise Dialogen erforderlich sind, das heißt insbesondere, dass sie sich auf inhaltlichen Information, Steuerinformationen oder Bildungsregeln für Informationsausgaben oder Dialoge beziehen können. Beispielsweise können Ausgabenbestandteile auch mit Hilfe eines Kodex vorkodierte Fragmente (zum Beispiel Sprach- oder Videofragmente) enthalten, die dann zu einer Ausgabe zusammengesetzt werden. Die Vorkodierung hat den Vorteil eines Effizienzgewinns, da der Kodierungsaufwand während der Abarbeitung eines Dienstes reduziert werden kann.

Die Erfindung ist für verschiedenartige Netze, unter anderem, leitungsvermittelten Netze wie auch paketvermittelten Netze, anwendbar. Ebenso lassen sich sowohl Sprach- wie auch Video- oder Audioinformationen im Rahmen der Dienste ausgeben.

Die Erfindung wird im Folgenden im Rahmen eines Ausführungsbeispiels anhand von Figuren näher erläutert. Es zeigen:
Fig.1: Schematische Darstellung eines Systems zur Generierung und Ausgabe von Informationsausgaben bzw. Dialogen, welches eine erfindungsgemäße Anordnung umfasst, und
Fig.2: Darstellung physikalischer Komponenten eines Systems zur Generierung und Ausgabe von Informationsausgaben bzw. Dialogen, welches eine erfindungsgemäße Anordnung umfasst.

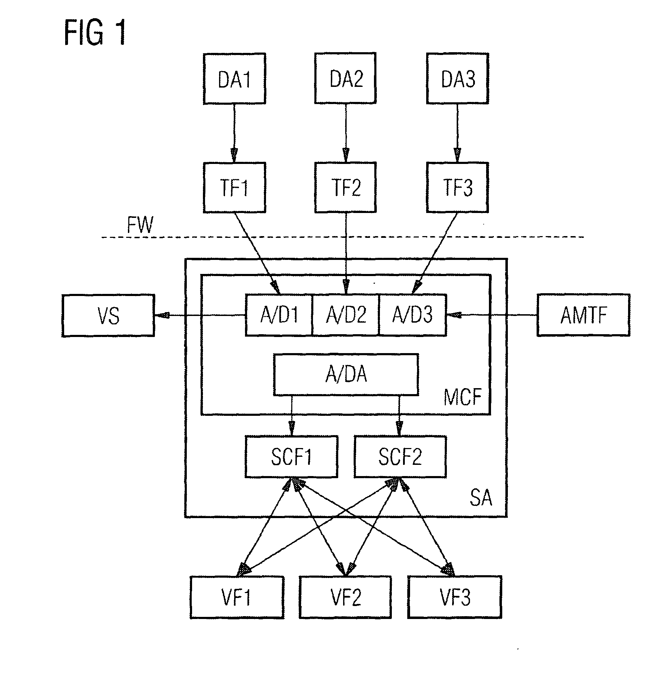

Fig. 1 zeigt schematisch ein System für die Generierung beziehungsweise Erzeugung von Informationsausgaben, zum Beispiel Sprachausgaben, oder interaktiven Dialogen, die Dienstnutzern zur Verfügung gestellt werden können. Erfindungsgemäß können Dienstanbieter DA1, DA2 und DA3 auf eine erfindungsgemäße Anordnung SA (SA: für Speicheranordnung), welche von einem Netzbetreiber beziehungsweise einem Betreiber eines Systems zur Informationsausgabe oder interaktive Dialoge betrieben und administriert wird. Die Dienstanbieter DA1, DA2 und DA3 greifen mittels ihnen zugeordneter Gestaltungssysteme TF1, TF2 und TF3 (TF: für Tooling Function) für Informationsausgaben bzw. Dialoge auf die Anordnung SA zu. Innerhalb der Gestaltungssysteme TF1, TA2 und TF3 können Komponenten für neue oder geänderte Informationsausgaben oder Dialoge kreiert werden. Diese Komponenten werden dann beispielsweise mittels des HTTP-Protokolls zu der Speicheranordnung SA transferiert und auf einem dem jeweiligen Dienstanbieter DA1, DA2 oder DA3 zugeordneten Speicherbereich A/D1, A/D2 oder A/D3 für Ansagen A beziehungsweise Dialoge D abgelegt. Der Zugriff der Dienstanbieter DA1, DA2 und DA3 ist dadurch abgesichert, dass nur Berechtigungen für den jeweiligen ihm zugewiesenen Speicherbereich A/D1, A/D2 oder A/D3 bestehen, und dass ein Firewall FW zwischen der Anordnung SA und den Gestaltungssystemen TF1, TF2 und TF3 der Dienstanbieter DA1, DA2 oder DA3 vorgesehen ist. Der Betreiber der Speicheranordnung SA verfügt selber über ein Gestaltungssystem AMTF (für Administration Master Tooling Function), von welcher er aus Komponenten für Ansagen A beziehungsweise Dialogen D auf einem ihm zugehörigen Speicherbereich A/DA (A/DA: Ansagen A bzw. Dialoge D des Netzbetreibers bzw. Administrators A) für Systemansagen bzw. für dem Netzbetreiber zugehörige Dialoge ablegen kann. Die Speicheranordnung SA selber ist in zwei verschiedene funktionale Teile unterteilt, nämlich einer Versorgungsvorrichtung MCF (für Master Content Function), welche die Speicherbereiche beinhaltet, auf welche die Dienstanbieter DA1, DA2 und DA3 und der Systembetreiber über das Gestaltungssystem AMTF zugreift. Der Zugriff eines Dienstanbieters bzw. die Ablage einer oder mehrer neuer oder geänderter Komponenten für Ansagen oder Dialoge, triggert bzw. löst zwei Ereignisse aus: Zum Einen werden die geänderten oder neuen Komponenten zu Bereitstellungsvorrichtungen SCF1 und SCF2 (SCF für Slave Content Function) übertragen, wo sie für Informationsausgabevorrichtungen, wie zum Beispiel VF1, VF2 und VF3 (VF für Voice Function) zur Verfügung stehen. Zum Anderen wird durch die Ablage neuer bzw. geänderter Komponenten eine Vergebührung dieser Änderung in Gang gesetzt, welche mittels einer zu einem Vergebührungsserver VS geschickten Nachricht realisiert wird. Ebenso wie bei den Dienstanbietern werden auch von dem Systembetreiber bzw. Netzbetreiber mittels des Gestaltungssystems ATMF abgelegte Komponenten automatisch zu den Bereitstellungsvorrichtungen SCF1 und SCF2 übertragen. Eine Vergebührung ist hierbei in der Regel nicht erforderlich, da Gestaltungssystem AMTF und Anordnung SA demselben Betreiber zugehören. Die Informationsausgabevorrichtungen VF1 bis VF3 greifen für die Abarbeitung von Diensten auf in den Bereitstellungsvorrichtungen SCF1 und SCF2 gespeicherte Komponenten zurück, aus denen die im Rahmen des Dienstes gewünschte Ausgabe beziehungsweise der gewünschte Dialog zusammengesetzt wird.

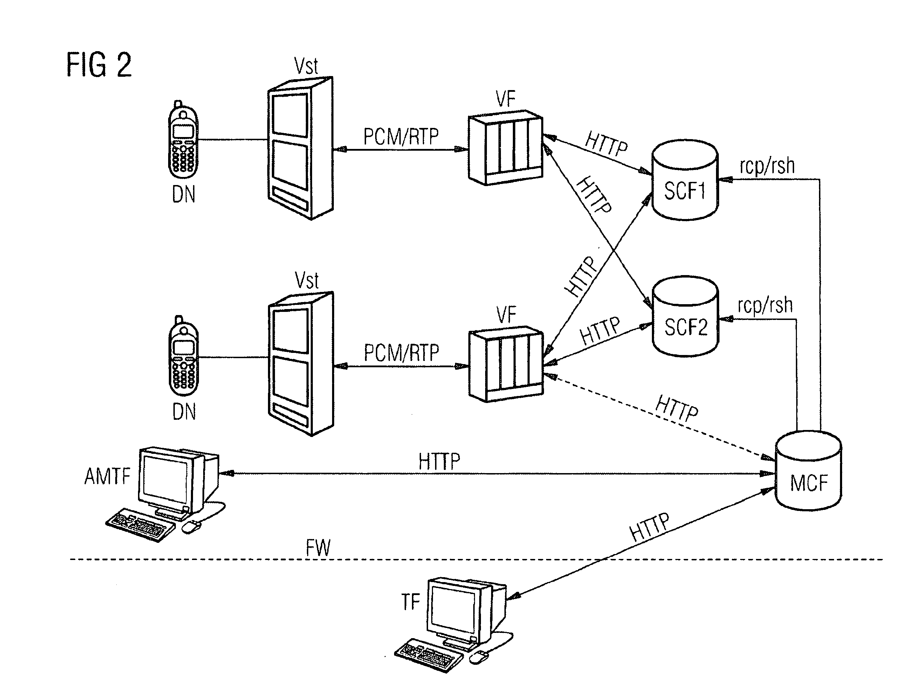

Die Speicheranordnung SA bildet zwar eine funktionale Einheit, ist aber in einer bevorzugten Lösung mittels getrennter Hardwareelemente realisiert. Diese bevorzugte Version wird in Fig. 2 deutlich. Fig. 2 zeigt das Komponentengestaltungssystem TF eines Dienstanbieters, sowie das Komponentengestaltungssystem AMTF des Systembetreibers, von welchem aus zum Beispiel über ein IP-Netz neue oder geänderte Komponenten zu der Versorgungsvorrichtung MCF mittels des HTTP-Protokolls übertragen werden können. Der Zugriff von Dienstanbietern ist wieder mittels Firewall FW abgesichert. Modifizierte beziehungsweise neue Komponenten werden mittels der Unix-Befehle rcp (remote copy) oder rsh (remote shell) zu den Bereitstellungsvorrichtungen SCF1 und SCF2 übertragen. In dieser Ausführung sind die zur Anordnung SA gehörigen Bereitstellungsvorrichtungen MCF, sowie die Versorgungsvorrichtungen SCF1 und SCF2 auf verschiedenen Hardwareplattformen bzw. Servern realisiert. Auf die Bereitstellungsvorrichtungen SCF1 und SCF2 können Informationsausgabevorrichtungen VF für die Abarbeitung eines Ansage- beziehungsweise Dialogdienstes zugreifen. Ein Ansage- beziehungsweise Dialogdienst wird gesteuert durch eine Vermittlungsstelle Vst, wobei Ansage- beziehungsweise Dialogdienste sowohl über leitungsvermittelte Netze mit Hilfe der PCM (Pulse Code Modulation)-Technik, als auch über paketvermittelte Netze mittels des RTP-Protokolls (RTP: Real Time Protocol), welches für über IP-Netze abgewickelten Echtzeitverkehr konzipiert wurde, möglich sind. Von den Informationsausgabevorrichtungen VF ausgegebenen Informationen werden letztendlich mit Hilfe der Vermittlungsstellen Vst zu einem Dienstnutzer DN übertragen, der einen von dem Dienstanbieter angebotenen Dienst in Anspruch nimmt.

Beispiele für Dienste, die durch einen Dienstanbieter mittels der in Fig.1 bzw. Fig.2 beschriebenen Systeme realisiert werden können, sind:
- Ein Dienstanbieter ist ein Telekommunikationsanbieter, der in seiner Warteschleife auf seine neuesten Angebote hinweisen will. Die Ansage der Angebote wird monatlich auf den neusten Stand gebracht.
- Ein anderer Dienstanbieter benutzt Televoting, damit man an seinem Gewinnspiel im Fernsehen mitmachen kann. In der Ansage zum Abweisen nicht angenommener Mitspieler soll auf neue Entwicklungen im Gewinnspiel usw. hingewiesen werden, um den Teilnehmer zum erneuten Anruf zu bewegen. Diese Ansage muss täglich aktualisiert werden.

Beide Dienste können durch Anmietung von Ressourcen beim Netzbetreiber bzw. dem Betreiber der erfindungsgemäßen Anordnung SA und der Ansagesysteme VF realisiert werden.

Der Netzbetreiber selbst will seine Systemansagen auch ändern können. Dies geschieht in der Regel eher selten, z.B. bei einem Versionswechsel in Vermittlungsstellen Vst in seinem Zuständigkeitsbereich.

Jeder der Dienstanbieter erhält die URL (universal resource locator) für eine Web-GUI (GUI: graphical user interface), in der er den Inhalt der entsprechenden Ansagen und Dialoge per Text (benutzt wird dann eine text-to-speech Software) oder (durch z.B. an seinem PC oder in einem Tonstudio aufgezeichnete) WAV-files festlegen kann. Außerdem gibt er den Aktualisierungszeitpunkt an. Daraufhin wird von dem Tool die entsprechenden Änderungen auf einem sogenannten Master-Resource-Content-Server (welcher der Versorgungsvorrichtung MCF entspricht) auf Korrektheit geprüft und (mit Hilfe von Voice-XML) aufgezeichnet, sowie die benötigten WAV-files auf den Server geladen.

Dazu ist jedem Dienstanbieter vorher ein Verzeichnis (A/D1, A/D2 und A/D3 in Fig.1) auf dem Master-Resource-Content-Server MCF zugewiesen worden, in dem sich die Ansagen befinden, die von ihm geändert werden können. Dieses Verzeichnis ist mit username/password Identifizierung gesichert.

Die entsprechenden Ansagen werden auf das Verzeichnis (A/D1, A/D2 oder A/D3 in Fig.1) des Dienstanbieters umgelenkt. Dazu wird in einem Voice-XML-file, das bei der entsprechenden Ansage standardmäßig aufgerufen wird, auf die neue im Verzeichnis des Dienstanbieters liegende Beschreibung verwiesen.

Dieses Voice-XML-file im Verzeichnis des Anbieters wird zum Zeitpunkt der Änderung gegen die neue Definition ausgetauscht.

Die auf dem Master-Resource-Content-Server MCF gemachten Änderungen werden mittels der UNIX-Kommandos rcp (remote copy; kopieren von Dateien auf einen anderen Server) und rsh (remote shell; absetzen von Systemkommandos auf einem anderen Server) auf die Slave-Resource-Content-Server bzw. die Bereitstellungsvorrichtungen (SCF1 bzw. SCF2 in den Figuren) repliziert. Die Anzahl dieser Server kann an die benötigte Performance angepasst werden.

Gleichzeitig wird zum Änderungszeitpunkt ein Ticket zur Vergebührung erstellt, das Daten, wie die Kennung des Dienstbetreibers, den Zeitpunkt der Änderung usw. aufzeichnet. Damit können vom Netzbetreiber die Änderung, sowie auch die unterschiedlichen Änderungsintervalle vergebührt werden.

Über eine Administrations-GUI (GUI: Graphical User Interface) hat der Netzbetreiber die Möglichkeit, seine eigenen Systemansagen zu verwalten. Hier wird ein ganzer Satz neuer Systemansagen aufgespielt. Auch diese Änderung kann erst zu einem bestimmten Zeitpunkt (z.B. verkehrsschwache Zeiten) wirksam gemacht werden. Die Änderungen für die Dienstanbieter werden von diesem Tool, d.h. der Administrations-GUI bzw. dem Gestaltungssystem AMTF des Betreibers, bei den neuen Definitionen der Systemansagen nachgezogen.

Der Netzbetreiber kann neue Kennungen für die Dienstanbieter auf dem Master-Resource-Content-Server MCS einrichten. Diesen Kennungen werden dann die Ansagen zugewiesen, wobei das Tooling hierfür die Verzeichnisse anlegt und bei den entsprechenden Ansagen auf dieses Verzeichnis verweist. (Dieser Verweis wird beim Löschen des Users wieder rückgängig gemacht.) Auch diese Änderungen werden auf die Slave-Resource-Content-Server repliziert.

Auch die Einrichtung dieser Slave-Resource-Content-Server selbst kann mit der GUI erledigt werden.

Dem Resource Voice Server (der Voicefunktion VF1, VF2 und VF3 in Fig.1, VF in Fig.2) wird die Änderung bekannt gemacht. Dabei ist es z.B. möglich, über die Konfiguration des Webservers Apache mittels htaccess-file, die caching-Zeit der Ansage zu beeinflussen (Diese ist Bestandteil des http-Protokolls und wird darüber dem Resource Voice Server übermittelt).

Über die Administrations-GUI hat der Netzbetreiber die Gelegenheit, auch die caching-Zeit zu verändern. Er kann diese für die verschiedenen Service-User unterschiedlich einstellen. Er kann ebenfalls untere und obere Schranken sowie eine Voreinstellung innerhalb dieser Schranken spezifisch für einen Dienstanbieter definieren, so dass letzterer die Option besitzt, die Voreinstellung im vorgegebenen Intervall ggf. gebührenwirksam verändern zu können.

Beim ersten oben beschriebenen Beispiel für einen Anbieter, der das erfindungsgemäße System nutzt, kann als Änderungsintervall 24 Stunden gewählt werden. Erst wenn die Definition einen Tag alt ist, wird vom der Informationsausgabevorrichtung bzw. dem Resource-Voice-Server VF eine neue Definition vom Slave-Resource-Content-Server SCF1 bzw. SCF2 abgefragt. Auf diese Weise kann unnötige Netzlast vermieden und die Anzahl der Slave-Resource-Content-Server SCF1 und SCF2 verringert werden.

Beim zweiten Anbieter kann als Aktualisierungsrate 1 Stunde oder 'sofort', d.h. die Ansage wird im Resource-Voice-Server VF nicht gecached, eingestellt werden. Hier sind mehr Ressourcen einzuplanen. Die Nutzung dieser Ressourcen kann aber abgerechnet werden, da alle Änderungen protokolliert und Tickets erstellt werden.

Bei den Systemansagen kann der Resource-Voice-Server VF direkt über Änderungen informiert werden, da diese Änderungen nicht sehr häufig passieren und die Einführung neuer Features beim Netzbetreiber lange im voraus geplant werden.

## Patentansprüche

1. Anordnung (SA) zur durch Dienstanbieter (DA1, DA2, DA3) triggerbaren Bereitstellung von Komponenten für eine Informationsausgabe oder einen interaktive Dialog, welche bzw. welcher durch ein Informationsausgabesystem oder ein Dialogsystem erzeugbar ist, mit
- einer Versorgungsvorrichtung (MCF) für geänderte oder neue Komponenten von Informationsausgaben bzw. Dialogen, auf welche die Dienstanbieter (DA1, DA2, DA3) Zugriff haben, und
- wenigstens einer Bereitstellungsvorrichtung (SCF1, SCF2), zu der von der Versorgungsvorrichtung (MCF) geänderte oder neue Komponenten von Informationsausgaben bzw. Dialogen übertragbar sind.

2. Anordnung (SA) nach Anspruch 1,
**dadurch gekennzeichnet, dass**
- die Versorgungsvorrichtung (MCF) einen Speicherbereich (A/D1, A/D2, A/D3) für Dienstanbieter (DA1, DA2, DA3) zugeordneten Komponenten und einen Speicherbereich (A/DA) für dem Betreiber des Informationsausgabesystem bzw. Dialogsystems zugeordneten Komponenten umfasst, und Dienstanbieter (DA1, DA2, DA3) keinen Zugriff auf dem Betreiber des Informationsausgabesystems bzw. des Dialogsystems zugeordnete Komponenten haben.

3. Anordnung (SA) nach Anspruch 2,
**dadurch gekennzeichnet, dass**
- Dienstanbieter (DA1, DA2, DA3) authentifiziert werden und auf der Versorgungsvorrichtung (MCF) nur auf dem jeweils authentifizierten Dienstanbieter (DA1, DA2, DA3) zugeordnete Komponenten bzw. Speicherbereiche (A/D1, A/D2, A/D3) Zugriff haben.

4. Anordnung (SA) nach einem der vorhergehenden Ansprüche,
**dadurch gekennzeichnet, dass**
- ein Gestaltungssystem (TF, TF1, TF2, TF3) für die Erzeugung und Änderung von Komponenten gegeben ist, welches einem Dienstanbieter (DA1, DA2, DA3) zugeordnet ist und von dem aus neue oder geänderte Komponenten zu der Versorgungsvorrichtung (MCF) übertragbar sind.

5. Anordnung (SA) nach einem der vorhergehenden Ansprüche,
**dadurch gekennzeichnet, dass**
- ein Firewall (FW) zwischen den den Dienstanbietern zugeordneten Gestaltungssystemen (TF, TF1, TF2, TF3) oder einer von einem Dienstanbieter (DA1, DA2, DA3) zum Zugriff auf die Versorgungsvorrichtung (MCF) verwendeten Rechnerplattform und der Versorgungsvorrichtung (MCF) angeordnet ist.

6. Anordnung (SA) nach einem der vorhergehenden Ansprüche,
**dadurch gekennzeichnet, dass**
- für die Übertragung von Komponenten von Dienstanbietern (DA1, DA2, DA3) zu der Versorgungsvorrichtung (MCF) eine Zugriffsberechtigung eingerichtet ist.

7. Anordnung (SA) nach einem der vorhergehenden Ansprüche,
**dadurch gekennzeichnet, dass**
- ein Gestaltungssystem (AMTF) für die Erzeugung und Änderung von Komponenten gegeben ist, welches dem Betreiber der Anordnung (SA) zugeordnet ist und von dem aus neue oder geänderte Komponenten zu der Versorgungsvorrichtung (MCF) übertragbar sind.

8. Anordnung (SA) nach einem der vorhergehenden Ansprüche,
**dadurch gekennzeichnet, dass**
- ein Vergebührungsserver (VS) gegeben ist, zu welchem Vergebührungsinformationen von der Versorgungsvorrichtung (MCF) übermittelbar sind.

9. Anordnung (SA) nach einem der vorhergehenden Ansprüche,
**dadurch gekennzeichnet, dass**
- wenigstens eine zum Informationsausgabesystem bzw. Dialogsystem gehörige Informationsausgabevorrichtung (VF1, VF2, Vf3, VF) gegeben ist, die auf wenigstens eine Bereitstellungsvorrichtung (SCF1, SCF2) für Informationsausgaben oder interaktive Dialoge zugreifen kann.

10. Anordnung(SA) nach einem der vorhergehenden Ansprüche,
**dadurch gekennzeichnet, dass**
die Versorgungsvorrichtung (MCF) auf einer von der Bereitstellungsvorrichtungen (SCF1, SCF2) getrennten Hardwareplattform realisiert ist.

11. Anordnung (SA) nach einem der vorhergehenden Ansprüche,
**dadurch gekennzeichnet, dass**
mehrere Bereitstellungsvorrichtungen (SCF1, SCF2) des Informationsausgabesystems bzw. des Dialogsystems gegeben sind, zu denen von der Versorgungsvorrichtung (MCF) Komponenten übertragbar sind.

12. Anordnung(SA) nach einem der vorhergehenden Ansprüche,
**dadurch gekennzeichnet, dass**
die Versorgungsvorrichtung (MCF) zusammen mit einer Bereitstellungsvorrichtung (SCF1, SCF2) auf einer gemeinsamen Hardwareplattform realisiert ist.

13. Anordnung (SA) nach einem der vorhergehenden Ansprüche,
**dadurch gekennzeichnet, dass**
die Versorgungsvorrichtung (MCF) gedoppelt ist.

14. Verfahren zur Bereitstellung von Komponenten für neu erzeugte oder geänderte Informationsausgaben oder interaktive Dialoge mittels einer Anordnung (SA), welche eine Versorgungsvorrichtung (MCF) und wenigstens eine Bereitstellungsvorrichtung (SCF1, SCF2) umfasst, demzufolge
- eine zu der Versorgungsvorrichtung (MCF) übertragene neue oder geänderte Komponente einer Informationsausgabe oder eines interaktiven Dialogs automatisch von der Versorgungsvorrichtung (MCF) zu wenigstens einer Bereitstellungsvorrichtung (SCF1, SCF2) der Anordnung (SA) übertragen wird.

15. Verfahren nach Anspruch 14,
**dadurch gekennzeichnet, dass**
durch eine Dienstanbieter (DA1, DA2, DA3) eine Information bei der Versorgungsvorrichtung (MCF) spezifizierbar ist, durch welche der Zeitpunkt der Aktivierung einer neuen bzw. geänderten Komponente für einen Dienst gesteuert wird.

16. Verfahren nach einem der Ansprüche 14 oder 15,
**dadurch gekennzeichnet, dass**
- eine neue oder geänderte Komponente von einem einem Dienstanbieter (DA1, DA2, DA3) zugeordneten Gestaltungssystem (TF1, TF2, TF3, TF) zu der Versorgungsvorrichtung (MCF) übertragen wird.

17. Verfahren nach einem der Ansprüche 14 bis 16,
**dadurch gekennzeichnet, dass**
- für die Übertragung von Komponenten von einem dem Dienstanbieter (DA1, DA2, DA3) zugeordneten Gestaltungssystem (TF1, TF2, TF3, TF) zu der Versorgungsvorrichtung (MCF) bzw. für den Zugriff auf einem Dienstanbieter (DA1, DA2, DA3) zugeordnete Komponenten in der Versorgungsvorrichtung (MCF) eine Authentifizierung notwendig ist.

18. Verfahren nach einem der Ansprüche 14 bis 17,
**dadurch gekennzeichnet, dass**
- einem Dienstanbieter (DA1, DA2, DA3) geänderte oder neu erzeugte Komponenten in einem dem Dienstanbieter (DA1, DA2, DA3) zugeordneten Speicherbereich (A/D1, A/D2, A/D3) der Versorgungsvorrichtung (MCF) gespeichert werden.

19. Verfahren nach einem der Ansprüche 14 bis 18,
**dadurch gekennzeichnet, dass**
- eine neue oder geänderte Komponente von einem dem Betreiber des Speichersystems zugeordneten Gestaltungssystem (AMTF) zu der Versorgungsvorrichtung (MCF) übertragen wird.

20. Verfahren nach einem der Ansprüche 14 bis 19,
**dadurch gekennzeichnet, dass**
- eine Änderung oder Erzeugung einer Komponente durch einen Dienstanbieter (DA1, DA2, DA3) vergebührt wird.

21. Verfahren nach Anspruch 20,
**dadurch gekennzeichnet, dass**
- eine Vergebührungsinformation von der Versorgungsvorrichtung (MCF) zu einem Vergebührungsserver (VS) übermittelt wird.

22. Verfahren nach Anspruch 21,
**dadurch gekennzeichnet, dass**
eine Informationsausgabevorrichtung (VF, VF1, VF2, VF3) auf eine Bereitstellungsvorrichtung (SCF1, SCF2) im Zuge einer Informationsausgabe oder eines interaktiven Dialogs zwecks Übermittlung von Komponenten zugreift.

23. Verfahren nach Anspruch 22,
**dadurch gekennzeichnet, dass**
die Informationsausgabevorrichtung (VF, VF1, VF2, VF3) eine Informationsausgabe oder eine Ausgabe im Rahmen eines interaktiven Dialog aus bzw. mittels Komponenten zusammensetzt.

24. Verfahren oder Anordnung (SA) nach einem der vorhergehenden Ansprüche,
**dadurch gekennzeichnet, dass**
Komponenten durch kodierte oder zu kodierende Bestandteile einer Informationsausgabe oder Bildungsregeln für Informationsausgaben bzw. interaktive Dialoge gegeben sind.

25. Verfahren oder Anordnung (SA) nach einem der vorhergehenden Ansprüche,
**dadurch gekennzeichnet, dass**
die Informationsausgabe eine Ausgabe von Sprachinformationen, Videoinformationen oder Audioinformationen betrifft.

## Claims

1. Arrangement (SA) for the service provider (DA1, DA2, DA3) triggerable provision of components for an information output or interactive dialog which can be generated by an information output system or an interactive system, having
- a supply device (MCF), accessible by the service providers (DA1, DA2, DA3), for changed or new components of information outputs or interactive dialogs, and
- at least one provision device (SCF1, SCF2) to which changed or new components of information outputs or interactive dialogs can be transmitted by the supply device (MCF).

2. Arrangement (SA) according to claim 1,
**characterized in that**
- the supply device (MCF) comprises a storage area (A/D1, A/D2, A/D3) for components assigned to service providers (DA1, DA2, DA3) and a storage area (A/DA) for components assigned to the operator of the information output system or interactive system, and service providers (DA1, DA2, DA3) have no access to components assigned to the operator of the information output system or interactive system.

3. Arrangement (SA) according to claim 2,
**characterized in that**
- service providers (DA1, DA2, DA3) are authenticated and, on the supply device (MCF), only have access to components or storage areas (A/D1, A/D2, A/D3) assigned to the relevant authorized service provider (DA1, DA2, DA3).

4. Arrangement (SA) according to one of the preceding claims, **characterized in that**
- there is provided, for generating and changing components, a configuration system (TF, TF1, TF2, TF3) which is assigned to a service provider (DA1, DA2, DA3) and from which new or changed components can be transmitted to the supply device (MCF).

5. Arrangement (SA) according to one of the preceding claims, **characterized in that**
- a firewall (FW) is disposed between the supply device (MCF) and the configuration systems (TF, TF1, TF2, TF3) assigned to the service providers or a computer platform used by a service provider (DA1, DA2, DA3) to access the supply device (MCF).

6. Arrangement (SA) according to one of the preceding claims, **characterized in that**
- there is created an access authorization for the transmission of components by service providers (DA1, DA2, DA3) to the supply device (MCF).

7. Arrangement (SA) according to one of the preceding claims, **characterized in that**
- there is provided, for generating and changing components, a configuration system (AMTF) which is assigned to the operator of the arrangement (SA) and from which new or changed components can be transmitted to the supply device (MCF).

8. Arrangement (SA) according to one of the preceding claims, **characterized in that**
- there is provided a charging server (VS) to which charging information can be transmitted by the supply device (MCF).

9. Arrangement (SA) according to one of the preceding claims, **characterized in that**
- associated with the information output system or interactive system, there is provided at least one information output device (VF1, VF2, VF3, VF) which can access at least one provision device (SCF1, SCF2) for information outputs or interactive dialogs.

10. Arrangement (SA) according to one of the preceding claims, **characterized in that**
the supply device (MCF) is implemented on a hardware platform separate from the provision devices (SCF1, SCF2).

11. Arrangement (SA) according to one of the preceding claims, **characterized in that**
there are provided a plurality of provision devices (SCF1, SCF2) of the information output system or interactive systems to which components can be transmitted by the supply device (MCF).

12. Arrangement (SA) according to one of the preceding claims, **characterized in that**
the supply device (MCF) is implemented together with a provision device (SCF1, SCF2) on a common hardware platform.

13. Arrangement (SA) according to one of the preceding claims, **characterized in that**
the supply device (MCF) is duplicated.

14. Method for providing components for newly generated or changed information outputs or interactive dialogs by means of an arrangement (SA) comprising a supply device (MCF) and at least one provision device (SCF1, SCF2), wherein
- a new or changed component of an information output or interactive dialog transmitted to the supply device (MCF) is automatically transmitted by the supply device (MCF) to at least one provision device (SCF1, SCF2) of the arrangement (SA).

15. Method according to claim 14,
**characterized in that**
information in the supply device (MCF) is specifiable by a service provider (DA1, DA2, DA3), thereby controlling the time of activation of a new or changed component for a service.

16. Method according to one of claims 14 or 15,
**characterized in that**
- a new or changed component is transmitted to the supply device (MCF) by a configuration system (TF1, TF2, TF3, TF) assigned to a service provider (DA1, DA2, DA3).

17. Method according to one of claims 14 to 16,
**characterized in that**
- authentication is necessary for transmitting components to the supply device (MCF) from a configuration system (TF1, TF2, TF3, TF) assigned to the service provider (DA1, DA2, DA3) or for accessing components assigned to a service provider (DA1, DA2, DA3) in the supply device (MCF).

18. Method according to one of claims 14 to 17,
**characterized in that**
- components changed or newly generated by a service provider (DA1, DA2, DA3) are stored in a storage area (A/D1, A/D2, A/D3) of the supply device (MCF) assigned to the service provider (DA1, DA2, DA3).

19. Method according to one of claims 14 to 18,
**characterized in that**
- a new or changed component is transmitted to the supply device (MCF) by a configuration system (AMTF) assigned to the operator of the storage system.

20. Method according to one of claims 14 to 19,
**characterized in that**
- modification or creation of a component by a service provider (DA1, DA2, DA3) is charged.

21. Method according to claim 20,
**characterized in that**
- charging information is transmitted by the supply device (MCF) to a charging server (VS).

22. Method according to claim 21,
**characterized in that** an information output device (VF, VF1, VF2, VF3) accesses a provision device (SCF1, SCF2) in the course of an information output or interactive dialog for the purpose of component transmission.

23. Method according to claim 22,
**characterized in that**
the information output device (VF, VF1, VF2, VF3) composes an information output or an output forming part of an interactive dialog from or by means of components.

24. Method or arrangement (SA) according to one of the preceding claims,
**characterized in that**
components are constituted by coded or to be encoded elements of an information output or formation rules for information outputs or interactive dialogs.

25. Method or arrangement (SA) according to one of the preceding claims,
**characterized in that**
the information output relates to an output of voice information, video information or audio information.

## Revendications

1. Ensemble (SA) pour mettre à disposition, de manière déclenchable par des fournisseurs de services (DA1, DA2, DA3), des composants pour une sortie d'informations ou un dialogue interactif, laquelle resp. lequel peuvent être générés par un système de sortie d'informations ou un système de dialogue, avec
- un dispositif d'approvisionnement (MCF) pour des composants modifiés ou nouveaux de sorties d'informations resp. de dialogues, auquel les fournisseurs de services (DA1, DA2, DA3) ont accès, et
- au moins un dispositif de mise à disposition (SCF1, SCF2) auquel des composants modifiés ou nouveaux de sorties d'informations resp. de dialogues peuvent être transférés par le dispositif d'approvisionnement (MCF).

2. Ensemble (SA) selon la revendication 1,
**caractérisé en ce que**
- le dispositif d'approvisionnement (MCF) comprend une zone de mémoire (A/D1, A/D2, A/D3) pour des composants affectés à des fournisseurs de services (DA1, DA2, DA3) et une zone de mémoire (A/DA pour des composants affectés à l'exploitant du système de sortie d'informations resp. du système de dialogue, et des fournisseurs de services (DA1, DA2, DA3) n'ont pas accès à des composants affectés à l'exploitant du système de sortie d'informations resp. du système de dialogue.

3. Ensemble (SA) selon la revendication 2,
**caractérisé en ce que**
- des fournisseurs de services (DA1, DA2, DA3) sont authentifiés et, sur le dispositif d'approvisionnement (MCF), n'ont accès qu'à des composants resp. zones de mémoire (A/D1, A/D2, A/D3) affectés au fournisseur de services (DA1, DA2, DA3) respectivement authentifié.

4. Ensemble (SA) selon l'une des revendications précédentes,
**caractérisé par**
- la présence d'un système d'aménagement (TF, TF1, TF2, TF3)
pour générer et modifier des composants, lequel est affecté à un fournisseur de services (DA1, DA2, DA3) et à partir duquel des composants nouveaux ou modifiés peuvent être transférés au dispositif d'approvisionnement (MCF).

5. Ensemble (SA) selon l'une des revendications précédentes,
**caractérisé en ce que**
un pare-feu (FW) est situé entre les systèmes d'aménagement (TF, TF1, TF2, TF3) affectés aux fournisseurs de services ou une plate-forme informatique utilisée par un fournisseur de services (DA1, DA2, DA3) pour accès au dispositif d'approvisionnement (MCF) et le dispositif d'approvisionnement (MCF).

6. Ensemble (SA) selon l'une des revendications précédentes,
**caractérisé en ce que**
- une autorisation d'accès est établie pour le transfert de composants de fournisseurs de services (DA1, DA2, DA3) vers le dispositif d'approvisionnement (MCF).

7. Ensemble (SA) selon l'une des revendications précédentes,
**caractérisé par**
- la présence d'un système d'aménagement (AMTF) pour générer et modifier des composants, lequel est affecté à l'exploitant de l'ensemble (SA) et à partir duquel des composants nouveaux ou modifiés peuvent être transférés au dispositif d'approvisionnement (MCF).

8. Ensemble (SA) selon l'une des revendications précédentes,
**caractérisé par**
- la présence d'un serveur de facturation (VS) auquel des informations de facturation peuvent être transmises par le dispositif d'approvisionnement (MCF).

9. Ensemble (SA) selon l'une des revendications précédentes,
**caractérisé par**
- la présence d'au moins un dispositif de sortie d'informations (VF1, VF2, VF3, VF) appartenant au système de sortie d'informations resp. au système de dialogue, lequel dispositif peut accéder à au moins un dispositif de mise à disposition (SCF1, SCF2) pour des sorties d'informations ou des dialogues interactifs.

10. Ensemble (SA) selon l'une des revendications précédentes,
**caractérisé en ce que**
- le dispositif d'approvisionnement (MCF) est réalisé sur une plate-forme hardware séparée des dispositifs de mise à disposition (SCF1, SCF2).

11. Ensemble (SA) selon l'une des revendications précédentes,
**caractérisé par**
- la présence de plusieurs dispositifs de mise à disposition (SCF1, SCF2) du système de sortie d'informations resp. du système de dialogue, auxquels des composants peuvent être transférés par le dispositif d'approvisionnement (MCF).

12. Ensemble (SA) selon l'une des revendications précédentes,
**caractérisé en ce que**
- le dispositif d'approvisionnement (MCF) est réalisé conjointement avec un dispositif de mise à disposition (SCF1, SCF2) sur une plate-forme hardware commune.

13. Ensemble (SA) selon l'une des revendications précédentes,
**caractérisé en ce que**
- le dispositif d'approvisionnement (MCF) est doublé.

14. Procédé de mise à disposition de composants pour des sorties d'informations nouvellement générées ou modifiées ou des dialogues interactifs au moyen d'un ensemble (SA), lequel comprend un dispositif d'approvisionnement (MCF) et au moins un dispositif de mise à disposition (SCF1, SCF2), selon lequel
- un composant d'une sortie d'informations ou d'un dialogue interactif, nouveau ou modifié, transféré au dispositif d'approvisionnement (MCF), est transféré automatiquement du dispositif d'approvisionnement (MCF) à au moins un dispositif de mise à disposition (SCF1, SCF2) de l'ensemble (SA).

15. Procédé selon la revendication 14,
**caractérisé en ce que**
peut être spécifiée, par un fournisseur de services (DA1, DA2, DA3), au niveau du dispositif d'approvisionnement (MCF), une information par laquelle est commandé l'instant de l'activation d'un composant, nouveau resp. modifié, pour un service.

16. Procédé selon l'une des revendications 14 ou 15,
**caractérisé en ce que**
- un composant nouveau ou modifié est transféré d'un système d'aménagement (TF1, TF2, TF3, TF) affecté à un fournisseur de services (DA1, DA2, DA3) vers le dispositif d'approvisionnement (MCF).

17. Procédé selon l'une des revendications 14 à 16,
**caractérisé en ce que**
- une authentification est nécessaire pour le transfert de composants d'un système d'aménagement (TF1, TF2, TF3, TF) affecté au fournisseur de services (DA1, DA2, DA3) vers le dispositif d'approvisionnement (MCF) resp. pour l'accès à des composants affectés à un fournisseur de services (DA1, DA2, DA3) dans le dispositif d'approvisionnement (MCF).

18. Procédé selon l'une des revendications 14 à 17,
**caractérisé en ce que**
- des composants modifiés ou nouvellement générés pour un fournisseur de services (DA1, DA2, DA3) sont mis en mémoire dans une zone de mémoire (A/D1, A/D2, A/D3) du dispositif d'approvisionnement (MCF) affectée au fournisseur de services (DA1, DA2, DA3) .

19. Procédé selon l'une des revendications 14 à 18,
**caractérisé en ce que**
- un composant nouveau ou modifié est transféré d'un système d'aménagement (AMTF) affecté à l'exploitant du système de mémoire vers le dispositif d'approvisionnement (MCF).

20. Procédé selon l'une des revendications 14 à 19,
**caractérisé en ce que**
- une modification ou génération d'un composant par un fournisseur de services (DA1, DA2, DA3) est facturée.

21. Procédé selon la revendication 20,
**caractérisé en ce que**
- une information de facturation est transmise du dispositif d'approvisionnement (MCF) à un serveur de facturation (VS).

22. Procédé selon la revendication 21,
**caractérisé en ce que**
un dispositif de sortie d'informations (VF, VF1, VF2, VF3) accède à un dispositif de mise à disposition (SCF1, SCF2) dans le cadre d'une sortie d'informations ou d'un dialogue interactif aux fins d'un transfert de composants.

23. Procédé selon la revendication 22,
**caractérisé en ce que**
le dispositif de sortie d'informations (VF, VF1, VF2, VF3) assemble une sortie d'informations ou une sortie dans le cadre d'un dialogue interactif à partir de resp. au moyen de composants.

24. Procédé ou ensemble (SA) selon l'une des revendications précédentes,
**caractérisé en ce que**
des composants sont donnés par des éléments codés ou à coder d'une sortie d'informations ou des règles de formation pour des sorties d'informations resp. des dialogues interactifs.

25. Procédé ou ensemble (SA) selon l'une des revendications précédentes,
**caractérisé en ce que**
la sortie d'informations concerne une sortie d'informations vocales, d'informations vidéo ou d'informations audio.
